Europäisches Patentamt

**European Patent Office** (11) Publication number: **0 020 598**

Office européen des brevets **B1**

(12) **EUROPEAN PATENT SPECIFICATION**

(45) Date of publication of patent specification: **03.08.83** (51) Int. Cl.³: **A 47 J 31/06,**
**A 47 G 19/16,**
**B 65 D 81/34, B 01 D 23/04**

(21) Application number: **79901569.8**

(22) Date of filing: **14.11.79**

(86) International application number:
**PCT/DK79/00050**

(87) International publication number:
**WO 80/01037 29.05.80 Gazette 80/12**

(54) **DISPOSABLE FILTER BAG AND A METHOD OF MAKING EXTRACTION BEVERAGES.**

<table>
<tr><td>

(30) Priority: **16.11.78 DK 5109/78**

(43) Date of publication of application:
**07.01.81 Bulletin 81/1**

(45) Publication of the grant of the patent:
**03.08.83 Bulletin 83/31**

(84) Designated Contracting States:
**AT CH DE FR GB LU NL SE**

(56) References cited:
**DE - A - 1 804 425**
**DE - A - 2 111 702**
**DE - A - 2 135 336**
**DE - A - 2 238 214**
**FR - A - 1 269 805**
**FR - A - 1 371 186**
**US - A - 2 359 292**

</td><td>

(73) Proprietor: **VANGEDAL-NIELSEN, Erling**
**Kirke Vaerlosevej 67**
**DK-3500 Vaerlose (DK)**

(72) Inventor: **VANGEDAL-NIELSEN, Erling**
**Kirke Vaerlosevej 67**
**DK-3500 Vaerlose (DK)**

(74) Representative: **Ben-Nathan, Laurence Albert et al,**
**c/o MICHAEL BURNSIDE & PARTNERS 2**
**Serjeants' Inn Fleet Street**
**London EC4Y 1HL (GB)**

</td></tr>
</table>

Courier Press, Leamington Spa, England.

## Disposable filter bag and a method of making extraction beverages

The present invention relates to a filter bag and a method of making extraction beverages, and more particularly to a disposable filter bag for use in preparing extraction beverages, in particular tea.

It is known to prepare tea by means of sealed disposable filter bags pre-filled with tea leaves. These bags are usually provided with a string, the free end of which extends over the edge of the container in which the tea is being prepared, and by means of which the bag with the tea leaves can be removed from the tea extract when the desired extraction has taken place. As the filter bags are not aroma-tight they are usually provided with a protective outer envelope which naturally increase the production costs. Furthermore, only more common or widely used types of tea are available in this form due to the fact that such tea bags are produced on an industrial scale.

A system is furthermore known consisting of essentially rectangular disposable filter bags and a plastic holder therefor. The holder consists of two portions, a hollow inner portion provided with an external cone, and an outer portion with an internal cone. The filter bags, which are of paper, are open in one end and in use the bag opening is pulled up and around the outer cone of the inner portion of the holder, after which the inner portion with the filter bag is pressed down into the outer portion against the internal cone thereof so that the filter bag is clamped between the two portions of the holder. The holder with the bag is then placed over the teapot, tea is put into the filter bag, and water is poured through it. This system has the advantage that there is no restriction on the types of tea, and the tea may be brewed from any blend. It is, however, difficult to fasten the filter bag, and there is a risk that the bag will drop off and the tea leaves scatter in the tea. Besides, the holder only fits into certain teapots since it cannot at all be placed in pots with a small lid opening, and cannot cover the entire opening in teapots with a large lid opening. A further disadvantage is that the depth to which the filter bag will extend in teapots is predetermined and cannot be varied according to the shape of a particular teapot and the amount of tea to be brewed in a pot.

As examples of prior art reference is made to E—A—2,135,336; 2,217,927; 2,644,667; and 1,804,425.

An object of the present invention is to provide a disposable filter bag combining the advantages of the above disposable filter bag system without possessing the disadvantages thereof.

The invention provides a disposable filter bag for use in preparing extraction beverages, in particular tea, said bag comprising a generally flat, expandable bag made from a material having filtering properties and intended for receiving and containing a suitable amount of an extractable material and provided with a filling opening for said extractable material, characterized by comprising: an upper bag portion defining an elongate, longitudinally extending funnel-like compartment and a lower bag portion defining an extraction compartment for containing said extractable material, said funnel-like compartment having an upper opening being said filling opening and downwardly communicating with said extraction compartment through an opening having a transverse extension, which is substantially smaller than the transverse extension of the adjacent portion of the extraction compartment, said upper bag portion furthermore being adapted to serve in its unexpanded condition as a means by which the bag is held during the extraction and by which the bag is withdrawn after the extraction.

The invention further provides a method of making extraction beverages, in particular tea, by means of a generally flat, expandable bag means from a material having filtering properties, characterized by using a bag comprising an upper portion defining an elongate, longitudinally extending funnel-like compartment and a lower portion defining an extraction compartment, said funnel-like compartment having a filling opening at one end thereof, the other end communicating with said extraction compartment through an opening having a transverse extension, which is substantially smaller than the transverse extension of the adjacent portion of the extraction compartment, the method further comprising the steps of admitting extractable material to be extracted into the filling opening and allowing said extractable material to pass to the extraction compartment through the opening between the funnel-like compartment and the extraction compartment, inserting the tea bag with its lower bag portion into an extraction container through a lid openign therein, holding the bag by means of said upper bag portion while pouring liquid into the container, securing the bag in position in the container by clamping the upper bag portion between the lid opening and lid fitting therein allowing the liquid to extract the extractable material to a desired degree and withdrawing the bag from the container by means of the upper portion of the bag.

By means of a disposable filter bag according to the invention it is possible to prepare extraction beverages, including tea, from any extractable material without the need for any complicating filter holder. For instance the disposable filter bag according to the invention may be used for brewing tea by putting tea leaves through the funnel-like compartment down into the extraction compartment. When the tea leaves have been placed in the extraction compartment the upper portion of the bag with the funnel-like compartment performs the same function as the string of the known, pre-filled and sealed tea bags, the upper portion of the bag being folded over the lid opening of the pot and clamped by the lid for the desired period of extraction, i.e. until a desired extraction has taken place, whereafter the upper portion is used to remove the bag.

As a further advantage of the disposable filter bag according to the invention it has been found that the bag is essentially self-closing as the opening or constriction between the funnel-like compartment and the extraction compartment collapses during the bulging of the extraction compartment resulting from swelling of the extractable material during the extraction, whereby the extractable material is confined in the extraction compartment. Even if, by accident, a filter bag containing tea leaves should be dropped into the teapot, the tea leaves will not be scattered in the tea.

The disposable filter bag according to the invention comprises as already mentioned a funnel-like compartment downwards communicating with the extraction compartment through an opening having a transverse extension substantially smaller than that of the adjacent portion of the extraction compartment.

In order to be easily handable during the filling the length of the funnel-like compartment is generally at least about 6 cm. The terms "upper" and "lower" refer to the normal orientation of the filter bag when introducing extractable material therein through the filling opening.

The opening between the funnel-like compartment and the extraction compartment is usually centrally positioned in relation to the extraction compartment, and the filter bag is usually symmetrical about a longitudinal axis.

The expression "transverse extension" is intended to mean the greatest measure taken over a given cross section, such as for instance for a generally flat bag the measure when the bag is in flattened condition. The ratio between the transverse extension of the opening and the transverse extension of the adjacent portion of the extraction compartment is usually from 0.7 to 0.1, preferably from 0.6 to 0.2, and most preferred from 0.5 to 0.3.

The shape of the extraction compartment is not decisive as long as it can contain an amount of extractable material being appropriate according to the intended use, the portion adjacent the opening, however, will usually have a shoulder-like form, e.g. the lines defining the upper limitation of the extraction compartment when the bag is in its flattened condition may be at substantially right angles to the longitudinal axis. Especially for use in tall containers the height of the extraction compartment will often be larger than the width thereof.

The disposable filter bag is preferably formed of two sheets of material having filtering properties and being joined together. Examples of materials having filtering properties, and which may be used, are various forms of filtering paper, perforated plastic or metal sheets, woven and non-woven textile materials and the like. According to the invention the preferred material is filtering paper, such as filtering paper of the types used for disposable filter bags according to the known technique, e.g. filtering paper containing thermoplastic fibers. The filtering paper used is usually prepared from long-fibred fiber material (staple fibres) and in a relatively thin quality.

The joining may be performed in a manner known per se, such as by knurling, stamping or pressing, if desired supplemented by adhesion and/or heat, by welding, sewing or the like.

As the funnel-like compartment, besides serving as a funnel by the filling of extractable material, also is to be used for the clamping and subsequent removing of the filter bag, it may be an advantage that the funnel-like compartment is longer than the extraction compartment, for instance at least twice as long.

In an embodiment presently preferred the funnel-like compartment and the extraction compartment are of about the same length.

In a special embodiment the upper portion comprises a water-repellant band area extending around the funnel-like compartment to break the wick-action. This water-repellant area may for instance be formed by impregnation with a water-repellant material or simply be sealing the pores of the filtering material. When choosing the material to form the water-repellant area the intended use of the filter bag should be taken into consideration.

The disposable filter bag according to the present invention is intended for use in preparing extraction beverages, and in particular for use in brewing tea, including various forms of herb tea, but the bag can of course also be used for other similar purposes.

When filling the bag the degree to which the extractable material in question will swell during the extraction will have to be considered, as otherwise there can be a risk of bursting of the bag because of its capability of self-closing.

The present invention is further described hereinafter with reference to the drawing, wherein

Figure 1 shows a schematic plan view of an embodiment of the disposable filter bag according to the invention,

Figure 2 shows the same filter bag in a schematic perspective view and containing tea leaves,

Figure 3 shows the filter bag during the brewing of tea in a teapot shown in a sectional view, and

Figure 4 shows a schematic plan view of another embodiment of the disposable filter bag according to the invention.

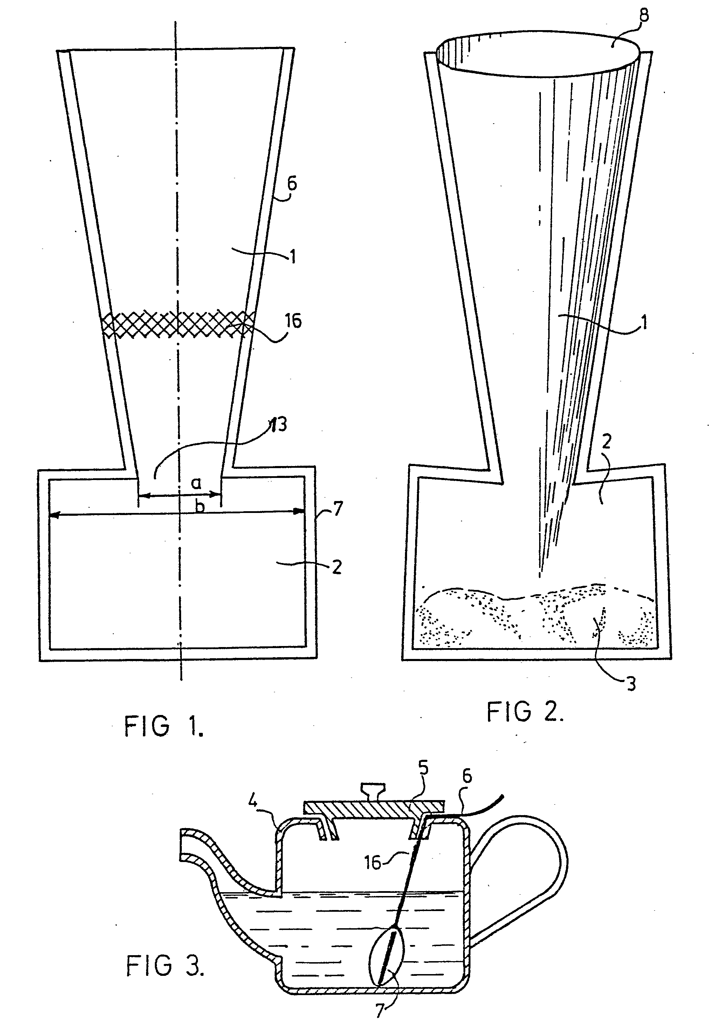

Referring to the drawings, figures 1 and 2 show a disposable filter bag having an upper bag portion 6 defining a funnel-like compartment 1 and having a filling opening 8. The compartment 1 communicates with an extraction compartment 2, defined in a lower bag portion 7, through an opening 13 having a transverse extension as indicated at *a* which is substantially smaller than the corresponding transverse extension, as indicated at *b*, of the adjacent portion of the extraction compartment. When brewing tea, tea leaves are introduced into the extraction compartment 2 through the funnel-like compartment 1. In figure 2 the tea leaves are indicated by the reference numeral 3. Figure 3 illustrates schematically a teapot 4 during the brewing of tea by means of a disposable filter bag according to the invention. Figure 3 illustrates how the filter bag is retained in the teapot by clamping the upper bag portion 6 by means of a lid 5 for the teapot, thereby holding the lower bag portion 7 and the tea leaves contained therein in position in the teapot.

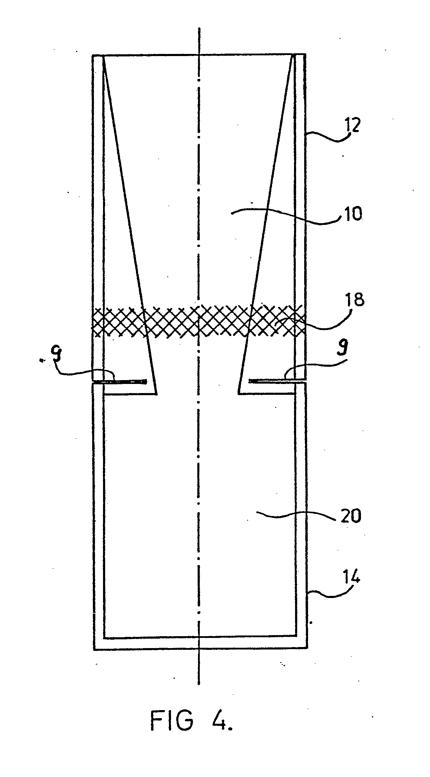

Figure 4 shows an embodiment, where the disposable filter bag is formed of two sheets of material being joined together to define a funnel-like compartment 10 in an upper bag portion 12 and an extraction compartment 20 in a lower bag portion 14. The surplus materials outside of the funnel-like compartment 10 have not been removed, but incisions 9 have been made. When extractable material, such as tea leaves, has been put into the extraction compartment 20, the flaps formed by the incisions 9 may be folded back on the central portion of the upper bag portion 12, for instance by folding along vertical lines, thereby forming a relatively narrow, strong multi-layer neck on the bag. The incisions 8 may be replaced by tear lines or perforation lines.

Preferably the filter bag is prepared as two sheets being joined together by marginal sealing lines as indicated in Figure 1, or by marginal sealing lines and a pair of converging sealing lines as indicated in Figure 4 alternatively, the two lateral and generally triangularly shaped areas of the upper bag portion 12 in Figure 4 may be sealed over the entire surfaces thereof.

If desired, a circumferentially extending area may be provided in the upper bag portion as indicated at 16 in Figure 1 and at 18 in Figure 4, the area being water-repellant in order to prevent water from sieving upwardly through the entire upper bag portion due to the wick-effect of the bag material.

## Claims

1. Disposable filter bag for use in preparing extraction beverages, in particular tea, said bag comprising a generally flat, expandable bag made from a material having filtering properties and intended for receiving and containing a suitable amount of an extractable material (3) and provided with a filling opening (8) for said extractable material, characterized by comprising: an upper bag portion (6, 12) defining an elongate, longitudinally extending funnel-like compartment (1, 10) and a lower bag portion (7, 14) defining an extraction compartment (2, 20) for containing said extractable material (3), said funnel-like compartment (1, 10) having an upper opening (8) being said filling opening and downwardly communicating with said extraction compartment (2, 20) through an opening (13) having a transverse extension (a), which is substantially smaller than the transverse extension (b) of the adjacent portion of the extraction compartment (21, 20), said upper bag portion (6, 12) furthermore being adapted to serve in its unexpanded condition as a means by which the bag is held during the extraction and by which the bag is withdrawn after the extraction.

2. A filter bag according to Claim, 1 characterized in that said bag is made from two sheets of filter paper being joined together in a pattern to provide said openings (8, 13) and compartments (1, 2, 10, 20).

3. A filter bag according to Claim 2, characterized in that said two sheets of filter paper comprise thermoplastic fibers and are joined together by heat sealings.

4. A filter bag according to one or more of the preceding Claims, characterized in that the ratio between the transverse extension (a) of the opening (13) and the transverse extension (b) of the adjacent portion of the extraction compartment (2) is from 0.6 to 0.2.

5. A filter bag according to one or more of the preceding Claims, characterized in that the length of the funnel-like compartment (1, 10) is at least about 6 cm.

6. A filter bag according to one or more of the preceding Claims, characterized in the length of the funnel-like compartment (10) and the length of the extraction compartment (20) are essentially the same.

7. A filter bag according to one or more of Claims 1—5, characterized in that the length of the funnel-like compartment (1) is greater than the length of the extraction compartment (2).

8. A filter bag according to one or more of the preceding Claims, characterized in that the upper bag portion (6, 12) comprises a water-repellant area (16, 18) extending circumferentially of the upper bag portion to break the wick-action in said bag material.

9. A filter bag filter to one or more of the preceding Claims, characterized in that the opening (13) between said funnel-like compartment (1, 10) and said extraction compartment (2, 20) being centrally positioned relative to the extraction compartment (2, 20).

10. A filter bag according to one or more of the preceding Claims, characterized in that said bag is symmetrical about a longitudinal axis.

11. A method of making extraction beverages, in particular tea, by means of a generally flat, expandable bag made from a material having filtering properties, characterized by using a bag comprising an upper portion (6, 12) defining an elongate, longitudinally extending funnel-like compartment (1, 10) and a lower portion (7, 14) defining an extraction compartment (2, 20), said funnel-like compartment (1, 10) having a filling opening (8) at one end thereof, the other end communicating with said extraction compartment (2, 20) through an opening (13) having a transverse extension (a), which is substantially smaller than the transverse extension (b) of the adjacent portion of the extraction compartment (2, 20) the method further comprising the steps of admitting extractable material (3) to be extracted into the filling opening (8) and allowing said extractable material to pass to the extraction compartment (2, 20) through the opening (13) between the funnel-like compartment (1, 10) and the extraction compartment (2, 20), inserting the tea bag with its lower bag portion (7, 14) into an extraction container (4) through a lid opening therein, holding the bag by means of said upper bag portion (6, 12) while pouring liquid into the container (4), securing the bag in position in the container (4) by clamping the upper bag portion (6, 12) between the lid opening and lid fitting (5) therein, allowing the liquid to extract the extractable material to a desired degree and withdrawing the bag from the container (4) by means of the upper portion (6, 12) of the bag.

**Patentansprüche**

1. Wegwerf-Filterbeutel zum Herstellen von Extraktions-getränken, insbesondere Tee, wobei der Beutel aus einem im allgemeinen flachen, aufblähbaren Beutel aus einem Material mit filternden Eigenschaften gebildet ist und zur Aufnahme einer geeigneten Menge einer extrahierfähigen Substanz bestimmt ist und eine Einfüllöffnung für die extrahierfähige Substanz aufweist, dadurch gekennzeichnet, daß er einen oberen Beutelteil (6, 12), der einen langgestreckten trichterförmigen Abschnitt (1, 10) bildet, und einen unteren Beutelteil (7, 14), der einen Extraktions-abschnitt (2, 20) zur Aufnahme der extra-hierfähigen Substanz (3) bildet, aufweist, wobei der trichterförmige Abschnitt (1, 10) eine obere Öffnung (8) hat, welche die Einfüllöffnung ist, und nach unten mit dem Extraktionsabschnitt (2, 20) durch eine Offnung (13) verbunden ist, die eine Querlänge (a) hat, welche wesentlich kleiner als die Querlänge (b) des angrenzenden Teiles des Extraktionsabschnittes (2, 20) ist, wobei der obere Beutelteil (6, 12) außerdem so gestaltet ist, daß er im nicht aufgeblähten Zustand also Halterung für den Beutel während der Extraktion und zum Herausnehmen des Beutels nach der Extraktion dient.

2. Filterbeutel nach Anspruch 1, dadurch gekennzeichnet, daß der Beutel aus zwei Blättern Filterpapier besteht, die so miteinander verbunden sind, daß sie die genannten Öffnungen (8, 13) un Abschnitte (1, 2, 10, 20) bilden.

3. Filterbeutel nach Anspruch 2, dadurch gekennzeichnet, daß diese beiden Blätter Filterpapier thermoplastische Fasern enthalten und durch Heißverkleben miteinander verbunden sind.

4. Filterbeutel nach einem oder mehreren der Ansprüche 1 bis 3, dadurch gekennzeichnet, daß das Verhältnis zwischen der Querlänge (a) der Öffnung (13) und der Querlänge (b) des angrenzenden Teiles des Extraktionsabschnittes (2) von 0.6 bis 0.2 beträgt.

5. Filterbeutel nach einem oder mehreren der Ansprüche 1 bis 4, dadurch gekennzeichnet, daß die Länge des trichterförmigen Abschnittes (1, 10) mindestens etwa 6 cm beträgt.

6. Filterbeutel nach einem oder mehreren de Ansprüche 1 bis 5, dadurch gekennzeichnet, daß die Länge des trichterförmigen Abschnittes (10) und die Länge des Extraktionsabschnittes (20) im wesentlichen gleich sind.

7. Filterbeutel nach einem oder meheren der Ansprüche 1 bis 5, dadurch gekennzeichnet, daß die Länge des trichterförmigen Anschnittes (1) größer als die Länge des Extraktionsabschnittes (2) ist.

8. Filterbeutel nach einem oder mehreren der Ansprüche 1 bis 7, dadurch gekennzeichnet, daß der obere Beutel (6, 12) eine wasserabstoßende Zone (16, 18) aufweist, die sich über den Umfang des oberen Beutelteiles erstreckt, um die Dochtwirkung in dem Beutelmaterial zu unterbrechen.

9. Filterbeutel nach einem oder mehreren der Ansprüche 1 bis 8, dadurch gekennzeichnet, daß die Öffnung (13) zwischen dem trichterförmigen Abschnitt (1, 10) und dem Extraktionsabschnitt (2, 20) zentral zum Extraktionsabschnitt (2, 20) angeordnet ist.

10. Filterbeutel nach einem oder mehreren der Ansprüche 1 bis 9, dadurch gekennzeichnet, daß der Beutel um eine Längsachse symmetrisch ausgebildet ist.

11. Verfahren zum Herstellen von Extraktionsgetränken, insbesondere Tee, mit Hilfe eines im allgemeinen flachen, aufblähbaren Beutels aus einem Material mit filternden Eigenschaften, dadurch gekennzeichnet, daß ein Beutel verwendet wird, der einen oberen Teil (6, 12) mit einem langgestreckten trichterförmigen Abschnitt (1, 10) und einen einen Extraktionsabschnitt (2, 20) bildenden unteren Teil (7, 14) aufweist, wobei der trichterförmige Abschnitt (1, 10) an einem Ende eine Einfüllöffnung (8) aufweist, während das andere Ende mit dem Extraktionsabschnitt (2, 20) durch eine Öffnung (13) mit einer Querlänge (a) verbunden ist, die wesentlich kleiner als die Querlänge (b) des angrenzenden Teiles des Extraktionsabschnittes (2, 20) ist, wobei das Verfahren weiterhin die Schritte des Zugebens von zu extrahierender extrahierfähiger Substanz (3) in die Einfüllöffnung (8) und das Eintretenlassen der extrahierfähigen Substanz in den Extraktionsabschnitt (2, 20) durch die Öffnung (13) zwischen dem trichterförmigen Abschnitt (1, 10) und dem Extraktionsabschnitt (2, 20), das Einsetzen des Teebeutels mit seinem unteren Beutelteil (7, 14) in einen Extraktionsbehälter (4) durch eine Deckelöffnung desselben, das Halten des Beutels Mittels des oberen Beutelteiles (6, 12), während Flüssigkeit in den Behälter (4) gegossen wird, das Befestigen des Beutels in Position im Behälter (4) durch Festklemmen des oberen Beutelteiles (6, 12) zwischen der Deckelöffnung und der Deckelfassung (5), das Zulassen, daß die Flüssigkeit die extrahierfähige Substanz bis zum gewünschten Grad extrahiert, und das Herausnehmen des Beutels aus dem Behälter (4) mittels des oberen Teiles (6, 12) des Beutels umfaßt.

**Revendications**

1. Sachet filtre jetable destiné à la préparation de boissons par extraction, en particulier de thé, le sachet comprenant un sachet expansible, généralement plat réalisé en un matériau à propriétés filtrantes et destiné à recevoir et contenir une quantité appropriée d'une substance extractible (3) et pourvu d'une ouverture de remplissage (8) destinée à cette substance extractible; caractérisé en ce qu'il comprend: une partie supérieure (6, 12) du sachet définissant un compartiment (1, 10) en forme d'entonnoir allongé et s'étendant longitudinalement et une partie inférieure (7, 14) du sachet définissant un compartiment d'extraction (2, 20) et destiné à contenir la substance extractible (3), le compartiment (1, 10) en forme d'entonnoir comprenant une ouverture supérieure (8) constituant l'ouverture de remplissage et communiquant vers le bas avec le compartiment d'extraction (2, 20) par l'intermédiaire d'une ouverture (13) de longueur transversale (a) sensiblement plus réduite que la longueur transversale (b) de la partie adjacente du compartiment d'extraction (2, 20), cette partie supérieure (6, 12) de sachet étant, en outre, adaptée pour servir dans sa condition non évasée de moyen de retenue du sachet lors de l'extraction et de retrait du sachet après l'extraction.

2. Sachet filtre selon la revendication 1, caractérisé en ce que ce sachet est constitué à partir de deux feuilles de papier filtre jointes l'une à l'autre selon une forme permettant de réaliser lesdites ouvertures (8, 13) et lesdits compartiments (1, 2, 10, 20).

3. Sachet filtre selon la revendication 2, caractérisé en ce que lesdites deux feuilles de papier filtre sont constituées par des fibres thermoplastiques et sont jointes l'une à l'autre par des scellements à chaud.

4. Sachet filtre selon une ou plusieurs des revendications précédentes, caractérisé en ce que le rapport entre la longueur transversale (a) de l'ouverture (13) et la longueur transversale (b) de la partie adjacente du compartiment d'extraction (2) est compris entre 0,6 et 0,2.

5. Sachet filtre selon une ou plusieurs des revendications précédentes, caractérisé en ce que la longueur du compartiment (1, 10) en forme d'entonnoir est d'au moins 6 cm.

6. Sachet filtre selon une ou plusieurs des revendications précédentes, caractérisé en ce que la longueur du compartiment (10) en forme d'entonnoir et la longueur du compartiment d'extraction (20) sont sensiblement les mêmes.

7. Sachet filtre selon une ou plusieurs des revendications 1 à 5, caractérisé en ce que la longueur du compartiment (1) en forme d'entonnoir est plus importante que la longueur du compartiment d'extraction (2).

8. Sachet filtre selon une ou plusieurs des revendications précédentes, caractérisé en ce que la partie supérieure (6, 12) du sachet comprend une zone hydrofuge (16, 18) s'étendant circonférentiellement sur la partie supérieure du sachet pour inhiber l'effet de mèche du matériau du sachet.

9. Sachet filtre selon une ou plusieurs des revendications précédentes, caractérisé en ce que l'ouverture (13) entre le compartiment (1, 10) en forme d'entonnoir et le compartiment d'extraction (2, 20) est disposée au centre par rapport au compartiment d'extraction (2, 20).

10. Sachet filtre selon une quelconque des revendications précédentes, caractérisé en ce que le sachet est symétrique par rapport à un axe longitudinal.

11. Procédé pour obtenir des boissons par extraction, en particulier du thé, au moyen d'un sachet expansible généralement plat réalisé en un matériau à propriétés filtrantes, caractérisé en ce qu'on utilise un sachet comprenant une partie supérieure (6, 12) définissant un compartiment allongé s'étendant longitudinalement et en forme d'entonnoir (1, 10), et une partie inférieure (7, 14) définissant un compartiment d'extraction (2, 20), le compartiment (1, 10) en forme d'entonnoir comprenant une ouverture de remplissage (8) à l'une de ses extrémités, son autre extrémité communiquant avec le compartiment d'extraction (2, 20) par une ouverture (13) ayant une longueur transversale (a) sensiblement plus réduite que la longueur transversale (b) de la partie adjacente du compartiment d'extraction (2, 20), procédé comprenant, en outre, les étapes consistant à placer la substance extractible (3) à extraire dans l'ouverture de remplissage (8) et à permettre à cette substance extractible de passer dans le compartiment d'extraction (2, 20) par l'ouverture (13) située entre le compartment (1, 10) en forme d'entonnoir et le compartiment d'extraction (2, 20), à insérer le sachet de thé par sa partie inférieure (7, 14), dans un récipient d'extraction (4) par une ouverture à couvercle de celui-ci, à maintenir le sachet au moyen de la partie supérieure du sachet (6, 12) tandis qu'on verse du liquide dans le récipient (4), à fixer le sachet en position dans le récipient (4) en serrant la partie supérieure (6, 12) du sachet entre l'ouverture du couvercle et le couvercle (5) qui s'y emboîte, à permettre au liquide d'extraire la substance extractible à un degré souhaité et à retirer le sachet du récipient (4) au moyen de la partie supérieure (6, 12) du sachet.

FIG 1.

FIG 2.

FIG 3.

FIG 4.